# FASCICULE DE BREVET EUROPEEN

(11) **EP 3 918 226 B1**
(45) Date de publication et mention de la délivrance du brevet: **26.06.2024**
(21) Numéro de dépôt: 19842388.1
(22) Date de dépôt: 09.12.2019
(51) Int. Cl.: F16F 9/58, B60G 13/18, B60G 7/04, F16F 7/10, F16F 13/10

(54) **BUTEE HYDRAULIQUE DE SUSPENSION DE VEHICULE AUTOMOBILE A MASSE INERTIELLE**
HYDRAULISCHER ANSCHLAG FÜR EINE KRAFTFAHRZEUGAUFHÄNGUNG MIT TRÄGHEITSMASSE
HYDRAULIC STOP FOR A MOTOR VEHICLE SUSPENSION WITH INERTIAL MASS

(30) Priorité: 31.01.2019 FR 1900940
(43) Date de publication de la demande: 08.12.2021
(73) Titulaire: Stellantis Auto SAS, 78300 Poissy (FR)
(72) Inventeur: DIMITRIJEVIC, Zoran, 91570 Bievres (FR); ROTA, Laurent, 91530 St Cheron (FR); CHILLON, Jean, 92100 Boulogne Billancourt (FR); MONTEIL, Christophe, 91640 Bris Sous Forges (FR)
(86) Numéro de dépôt international: PCT/FR2019/052971
(87) Numéro de publication internationale: WO 2020/157392

(56) Documents cités:
- EP-A2- 1 155 884
- GB-A- 1 358 691
- US-A1- 2018 017 130

## Description

La présente invention concerne une butée hydraulique de suspension de véhicule automobile, ainsi qu'un véhicule automobile comportant des suspensions équipées de ce type de butée hydraulique.

Les véhicules automobiles comportent pour chaque roue une suspension comprenant un ressort de suspension, et un amortisseur télescopique hydraulique qui freine les mouvements de cette suspension.

La suspension comporte généralement des butées de fin de course en élastomère, formant des tampons présentant une forte raideur qui arrêtent de manière rapide la fin de course en cas de choc important sur la suspension, avec un confort médiocre.

En complément l'amortisseur peut comporter une butée hydraulique de fin de course de compression, qui en cas de mouvement important de la suspension arrête progressivement la fin de course en fonction de sa vitesse.

On peut de cette manière prévoir une raideur plus faible du ressort de suspension, une valeur réduite de l'amortissement sur une partie centrale de sa course, assurant un meilleur filtrage des vibrations venant des petites irrégularités de la route, et utiliser la butée hydraulique sur une fin de course pour absorber l'énergie restant en cas de vitesse élevée sur la suspension générant une forte course.

Toutefois la butée de fin de course n'est généralement pas adaptée pour délivrer des efforts variables en fonction de la vitesse du mouvement, afin en particulier d'obtenir un régime essentiellement élastique pour les petites amplitudes assurant une tenue de caisse, et un freinage plus important sur les grandes amplitudes de suspension provenant des mouvements d'attaque sur une route fortement dégradée, ou comprenant des obstacles comme des ralentisseurs formant un bossage en travers de la route, générant des mouvements de caisse importants avec des fortes accélérations.

Par ailleurs un type d'amortisseur connu, présenté notamment par le document US-A1-20130037362, comporte un système à inertie comprenant une colonne de fluide reliant les deux chambres disposées de chaque côté du piston.

La colonne de fluide enroulée autour du corps de l'amortisseur, présente une section réduite et une longueur suffisamment importante pour contenir une masse de fluide mise en mouvement avec une grande vitesse par le débattement de la suspension, ce qui ajoute artificiellement une inertie lors des mouvements freinant les oscillations basses fréquences de la caisse.

Toutefois cet amortisseur à inertie n'est pas adapté pour une butée de fin de course. Le document EP 1 155 884 A2 divulgue toutes les caractéristiques du préambule de la revendication 1.

La présente invention a notamment pour but d'éviter ces inconvénients de la technique antérieure.

Elle propose à cet effet une butée hydraulique de fin de course de suspension de véhicule automobile, recevant suivant un axe principal une vitesse de compression à freiner, comprenant du côté recevant cette vitesse une chambre hydraulique de compression, et de l'autre côté un réservoir recevant le fluide venant de la chambre de compression lors de sa compression, cette butée étant remarquable en ce qu'elle comporte entre la chambre de compression et le réservoir un premier conduit inertiel contenant une première colonne de fluide formant un système de freinage principal, et en ce qu'elle comporte en parallèle de ce système de freinage principal, entre la chambre de compression et le réservoir un système de freinage secondaire pouvant transférer seulement une partie limitée de fluide de la chambre de compression vers le réservoir.

Un avantage de cette butée hydraulique est que pour les petites oscillations de la suspension arrivant sur la butée hydraulique, on obtient un transfert de fluide de la chambre de compression vers le réservoir passant à la fois en parallèle par le premier conduit et par le système de freinage secondaire, donnant un freinage réduit qui filtre bien ces petites oscillations en assurant le confort.

De plus lors des fortes accélérations avec des mouvements importants de la suspension, par exemple sur une route dégradée, après le transfert complet de la partie limitée de fluide de la chambre de compression en utilisant le système de freinage secondaire, la partie restante de fluide de cette chambre de compression passe uniquement par le système de freinage principal comprenant la première colonne de fluide à forte inertie, ce qui freine plus fortement ces mouvements.

La butée hydraulique selon l'invention peut de plus comporter une ou plusieurs des caractéristiques suivantes, qui peuvent être combinées entre elles, tout en restant dans le cadre des revendications annexées.

Selon l'invention, la partie limitée de fluide de la chambre de compression est comprise dans une chambre de compression secondaire incluse dans la chambre de compression, et peut être comprise dans un réservoir secondaire inclus dans le réservoir.

Dans ce cas, avantageusement la chambre de compression est séparée de la chambre de compression par une membrane souple, le réservoir secondaire pouvant être séparé du réservoir par une membrane souple.

Avantageusement, le système de freinage secondaire comporte un conduit inertiel secondaire comprenant une masse de fluide.

Avantageusement, la butée comporte une cloison de séparation séparant la chambre de compression du réservoir, comprenant une couronne radialement extérieure entourant une partie centrale, formant deux éléments, un élément contenant le premier conduit inertiel et l'autre contenant le système de freinage secondaire.

Dans ce cas, avantageusement le premier conduit inertiel comporte un enroulement hélicoïdal centré sur l'axe principal.

Avantageusement, le réservoir comporte une enveloppe élastique présentant une raideur qui au repos refoule le fluide vers la chambre de compression.

Avantageusement, la chambre de compression comporte une paroi extérieure souple, comprenant un tampon externe formé par une excroissance de cette paroi recevant la vitesse axiale.

Avantageusement, la butée comporte un clapet laissant un passage libre du fluide du réservoir vers la chambre de compression pour la remplir.

L'invention a aussi pour objet un véhicule automobile comportant des suspensions équipées de butées hydrauliques de fin de course, comprenant l'une quelconque des caractéristiques précédentes, tout en restant dans le cadre des revendications annexées.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
[Fig. 1] est une vue en coupe axiale d'une butée hydraulique selon l'invention ;
[Fig. 2] est un graphique présentant l'effort de compression de cette butée donnée uniquement par ses éléments élastiques ;
[Fig. 3] est un graphique présentant l'effort de compression de cette butée dépendant uniquement de la vitesse du mouvement de compression ;
[Fig. 4] est un graphique présentant l'inertie vue en fonction de la vitesse de compression ; et
[Fig. 5] est un graphique présentant en fonction de la fréquence, les accélérations verticales de la caisse pour une suspension équipée de ces butées.

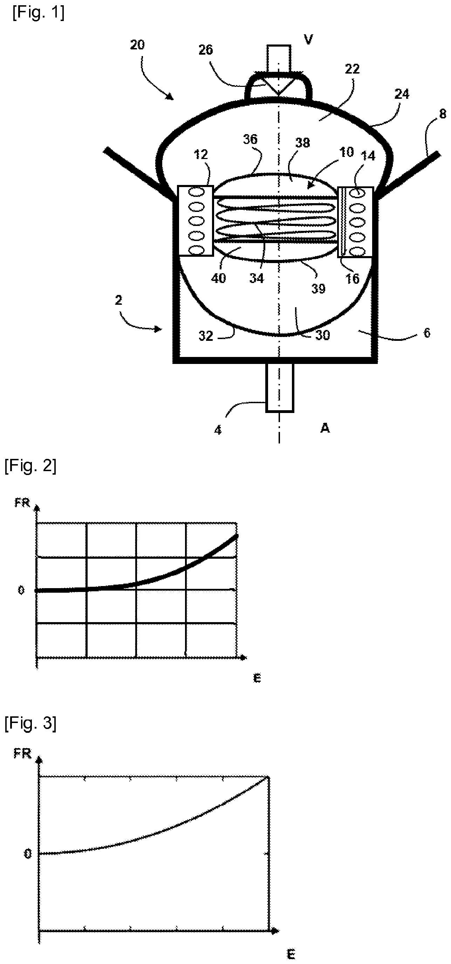

La figure 1 présente une butée de fin de course comprenant une symétrie axiale, recevant suivant cet axe A, d'un côté appelé par la suite par convention côté supérieur, un mouvement avec une vitesse V qui est à freiner. La butée peut être installée dans le véhicule suivant toutes les orientations, le côté supérieur faisant référence au dessin de la figure 1.

La butée comporte un support rigide 2 formant en dessous un boîtier cylindrique 6 équipé à sa base d'une tige filetée de fixation 4 sur un train du véhicule, en particulier sur le train arrière soumis à des fortes variations de charge dans le cas d'un chargement du coffre.

Le contour supérieur du boîtier 6 est entouré par une coupelle rigide conique 8 s'ouvrant vers le haut, présentant un angle d'environ 30° par rapport au plan transversal pour garantir une bonne déformation d'une paroi extérieure souple 24 agissant avantageusement comme un vérin.

Une cloison rigide de séparation 10 disposée transversalement, ferme l'ouverture supérieure du boîtier 6 en séparant une chambre principale supérieure de compression 22 d'un réservoir inférieur 30.

Un vérin en élastomère 20 comporte la paroi extérieure souple en élastomère 24 arrondie, contenant la chambre de compression principale 22, dont la base est fixée autour de la cloison de séparation 10, sur sa face supérieure. Le réservoir 30 disposé dans le boîtier inférieur 6, comporte une enveloppe élastique 32 fixée autour de la cloison de séparation 10, sur sa face inférieure.

Le sommet de la paroi extérieure souple 24 comporte un tampon externe 26 formé par une excroissance de cette paroi dépassant sur le dessus, recevant la vitesse de compression V d'un élément de la suspension proche de sa fin de course. Le tampon externe 26 constitue une première raideur de faible pente qui permet une prise de contact en souplesse de l'élément de suspension sur la butée de fin de course, afin notamment d'éviter des bruits.

La figure 2 présente en fonction de la compression E de la butée représentée sur l'axe horizontal, l'effort FR représenté sur l'axe vertical, donné uniquement par la compression de la paroi extérieure souple 24 avec son tampon externe 26.

A partir d'un point de contact sur la butée pour la compression 0, on a d'abord une faible pente de freinage FR donnée par la compression du tampon externe 26 présentant une faible raideur, puis ensuite un effort de plus en plus important.

La figure 1 présente la cloison de séparation 10 comportant radialement à l'extérieur une couronne 12 contenant à l'intérieur de sa section un premier conduit inertiel 14 formant un serpentin enroulé autour de l'axe principal A, recevant une masse de fluide créant une première inertie relativement importante, qui débouche d'un côté dans la chambre de compression principale 22 et de l'autre côté dans le réservoir 30 pour permettre un échange entre ces volumes.

Le premier conduit inertiel 14 présente une section et une longueur donnant un volume intérieur correspondant à une masse de fluide qui va être mise en mouvement, pour lors de son accélération réaliser un freinage par effet d'inertie s'opposant à l'accélération, et formant par ailleurs une restriction de passage freinant la vitesse de ce mouvement.

La couronne 12 peut comporter de plus des passages restreints 16 entre la chambre de compression 22 et le réservoir 30, disposés en parallèle du premier conduit inertiel 14, pour permettre certains échanges de fluide. En particulier on peut disposer un clapet de retour laissant un passage libre du réservoir 30 vers la chambre de compression 22, afin de permettre une remise en condition rapide après le fonctionnement de la butée lorsque la suspension remonte.

L'enveloppe élastique 32 du réservoir inférieur 30 présente une raideur suffisante pour, après un arrêt de la fin de course de la suspension, lors de sa remontée pousser le fluide vers la chambre de compression 22 afin de la remplir à nouveau.

La figure 3 présente en fonction de la vitesse de compression V de la butée, qui peut être positive ou négative, l'effort FR représenté sur l'axe vertical, provenant uniquement des pertes de charge données par la vitesse du fluide dans le premier conduit inertiel 14. L'effort FR est de plus en plus croissant avec la vitesse V.

La figure 1 présente la cloison de séparation 10 comportant à l'intérieur de la couronne 12, un conduit inertiel secondaire 34 formant un serpentin enroulé autour de l'axe principal A, recevant une masse de fluide créant une deuxième inertie.

Le conduit inertiel secondaire 34 débouche au-dessus dans une chambre de compression secondaire 38 fermée par une membrane souple supérieure 36 se fixant à l'intérieur de la couronne 12, et en dessous dans un réservoir secondaire 40 inclus dans le réservoir 30, fermé aussi par une membrane souple similaire inférieure 39 se fixant à l'intérieur de la couronne.

En variante on peut supprimer la membrane inférieure 39, le conduit inertiel secondaire 34 débouchant directement dans le réservoir 30.

La chambre de compression secondaire 38 incluse dans la chambre de compression principale 22 est soumise à la même pression, et le réservoir secondaire 40 inclus dans le réservoir principal 30 est aussi soumis à la même pression.

On obtient pour la première partie de compression de la butée de fin de course un premier mouvement du fluide de la chambre de compression principale 22 vers le réservoir 30 en passant par le premier conduit inertiel 14, et en parallèle un deuxième mouvement du fluide de la chambre de compression secondaire 38 subissant la même pression que la chambre de compression principale, vers le réservoir secondaire 40 en passant par le conduit inertiel secondaire 34.

Ce passage de fluide par le conduit inertiel secondaire 34 se fait uniquement pendant la première partie de course de la butée, correspondant à la vidange complète de la petite chambre de compression secondaire 38 s'écoulant dans le réservoir secondaire 40, ou directement dans le réservoir 30 dans le cas d'une absence de membrane inférieure 39. Ensuite le fluide passe uniquement par le premier conduit inertiel 14.

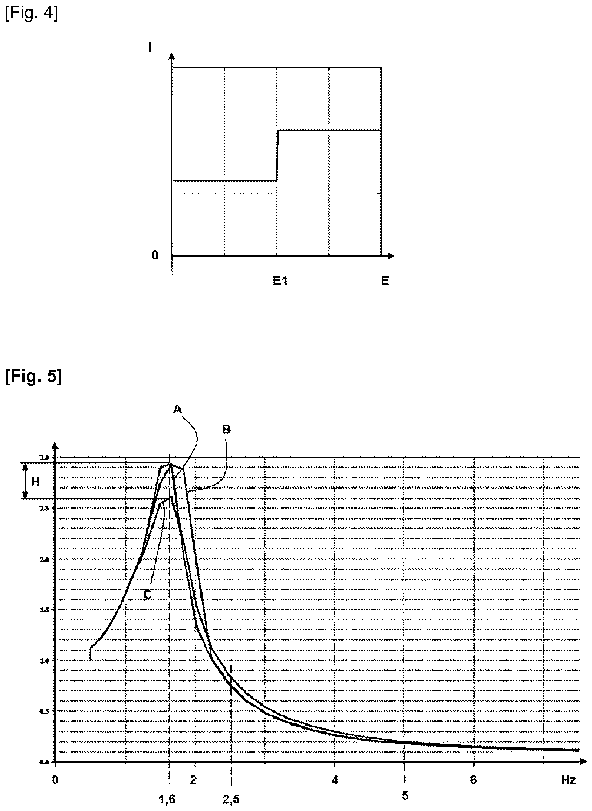

La figure 4 présente en fonction de la compression E de la butée, l'inertie de cette butée I. On a pour la première partie de course de la butée jusqu'à la compression E1, un écoulement du fluide à la fois en parallèle dans le conduit inertiel principal 14 et dans le conduit inertiel secondaire 34, ce qui donne peu d'accélération des masses de fluide. La force inertielle est faible.

On a pour la course suivante de la butée un écoulement du fluide uniquement par le conduit inertiel principal 14, ce qui augmente l'inertie I et entraine donc un effort inertiel plus élevé.

La paroi extérieure souple 24 présente une résistance à l'allongement qui, avec le guidage de la coupelle conique 8 limitant son expansion latérale lors de sa compression, permet de transformer de manière sensiblement linéaire la descente du sommet de cette paroi sous l'effet de la vitesse V, en un débit du fluide vers le réservoir 30 en passant par les conduits 14, 34.

On obtient un freinage très progressif de la fin de course de la suspension, cumulant les différentes forces présentées ci-dessus, qui s'adapte à la fois à la compression, à la vitesse de compression et à l'accélération de la compression.

En complément la cloison de séparation 10 peut comporter un clapet de limitation de pression, comprenant un ressort de tarage qui au-delà d'un seuil de pression élevé ouvre un passage vers le réservoir 30 afin de limiter les surpressions dans la chambre de compression 22 pour éviter des ruptures d'organes.

La butée hydraulique à inertie peut s'implanter facilement sur tous types de véhicules, à la place de la butée en élastomère extérieure généralement utilisée en parallèle du ressort et de l'amortisseur. Sa conception est simple, elle reprend une technologie déjà utilisée dans certains types de support moteur élastique, comprenant aussi dans une enveloppe en élastomère formant une chambre de compression un fluide passant dans une colonne à inertie. De plus aucun système de pilotage extérieur ne complique cette butée.

La figure 5 présente une simulation donnant en fonction de la fréquence d'excitation de la suspension exprimée en Hertz, la réponse de la caisse du véhicule pour un premier type de suspension A comprenant un ressort habituellement utilisé et un freinage de l'amortisseur faible, et un deuxième type de suspension B comprenant un ressort à raideur réduite et un freinage de l'amortisseur plus faible, comprenant une butée hydraulique de freinage de la fin de course.

Un troisième type de suspension C comporte un ressort à raideur réduite comme pour le deuxième type de suspension B, un amortisseur à freinage encore plus réduit sur l'ensemble de sa course, et une butée hydraulique à inertie de fin de course suivant l'invention.

On constate que pour une excitation à 1,6Hz correspondant à une fréquence de rebond de la suspension, le freinage inertiel de la butée permet de réduire l'amplitude d'une valeur H ce qui diminue l'accélération de la caisse et améliore le confort.

On obtient une bonne tenue de caisse dans la gamme de fréquence comprise entre 0,5 et 2,5Hz, par exemple sur route déformée, sans dégradation du filtrage entre 2,5 et 5Hz.

L'invention convient en particulier pour le train arrière d'un véhicule recevant des charges variables lors du chargement du coffre. On peut notamment disposer les butées sur un train arrière à traverse déformable.

## Revendications

1. Butée hydraulique de fin de course de suspension de véhicule automobile, recevant suivant un axe principal (A) une vitesse de compression à freiner (V), comprenant du côté recevant cette vitesse (V) une chambre hydraulique de compression (22), et de l'autre côté un réservoir (30) recevant le fluide venant de la chambre de compression (22) lors de sa compression, comportant entre la chambre de compression (22) et le réservoir (30) un premier conduit inertiel (14) contenant une première colonne de fluide formant un système de freinage principal, et comportant en parallèle de ce système de freinage principal, entre la chambre de compression (22) et le réservoir (30) un système de freinage secondaire pouvant transférer seulement une partie limitée de fluide de la chambre de compression (22) vers le réservoir (30), **caractérisée en ce que** la partie limitée de fluide de la chambre de compression (22) est comprise dans une chambre de compression secondaire (38) incluse dans la chambre de compression (22), et peut être comprise dans un réservoir secondaire (40) inclus dans le réservoir (30).

2. Butée hydraulique selon la revendication 1, **caractérisée en ce que** la chambre de compression secondaire (38) est séparée de la chambre de compression (22) par une membrane souple (36), le réservoir secondaire (40) pouvant être séparé du réservoir (30) par une membrane souple (39).

3. Butée hydraulique selon l'une quelconque des revendications précédentes, **caractérisée en ce que** le système de freinage secondaire comporte un conduit inertiel secondaire (34) comprenant une masse de fluide.

4. Butée hydraulique selon l'une quelconque des revendications précédentes, **caractérisée en ce qu'**elle comporte une cloison de séparation (10) séparant la chambre de compression (22) du réservoir (30), comprenant une couronne radialement extérieure (12) entourant une partie centrale, formant deux éléments, un élément contenant le premier conduit inertiel (14) et l'autre contenant le système de freinage secondaire.

5. Butée hydraulique selon la revendication 4, **caractérisée en ce que** le premier conduit inertiel (14) comporte un enroulement hélicoïdal centré sur l'axe principal (A).

6. Butée hydraulique selon l'une quelconque des revendications précédentes, **caractérisée en ce que** le réservoir (30) comporte une enveloppe élastique (32) présentant une raideur qui au repos refoule le fluide vers la chambre de compression (22).

7. Butée hydraulique selon l'une quelconque des revendications précédentes, **caractérisée en ce que** la chambre de compression (22) comporte une paroi extérieure souple (24), comprenant un tampon externe (26) formé par une excroissance de cette paroi (24) recevant la vitesse axiale (V).

8. Butée hydraulique selon l'une quelconque des revendications précédentes, **caractérisée en ce qu'**elle comporte un clapet laissant un passage libre du fluide du réservoir (30) vers la chambre de compression (22) pour la remplir.

9. Véhicule automobile comportant des suspensions équipées de butées hydrauliques de fin de course, **caractérisé en ce que** ces butées sont selon l'une quelconque des revendications précédentes.

## Patentansprüche

1. Hydraulischer Endlageranschlag für eine Kraftfahrzeugaufhängung, der in einer Hauptachse (A) eine zu bremsende Druckgeschwindigkeit (V) aufnimmt, auf der Seite, die diese Geschwindigkeit (V) aufnimmt, eine hydraulische Druckkammer (22) und auf der anderen Seite einen Behälter (30) aufweist, der das aus der Druckkammer (22) kommende Fluid bei seiner Kompression aufnimmt, der zwischen der Druckkammer (22) und dem Behälter (30) eine erste Trägheitsleitung (14) aufweist, die eine erste Fluidsäule enthält, die ein Hauptbremssystem bildet, und parallel zu diesem Hauptbremssystem zwischen der Druckkammer (22010102 2) und dem Behälter (30) ein Sekundärbremssystem zugeordnet ist, das nur einen begrenzten Fluidanteil von der Kompressionskammer (22) zum Behälter (30) übertragen kann, **dadurch gekennzeichnet, dass** der begrenzte Fluidanteil der Kompressionskammer (22) in einer sekundären Kompressionskammer (38) enthalten ist, die in der Kompressionskammer (22) enthalten ist, und in einem sekundären Behälter (40) enthalten sein kann, der in dem Behälter (30) enthalten ist.

2. Hydraulischer Anschlag nach Anspruch 1, **dadurch gekennzeichnet, dass** die sekundäre Druckkammer (38) von der Druckkammer (22) durch eine flexible Membran (36) getrennt ist, wobei der sekundäre Behälter (40) von dem Behälter (30) durch eine flexible Membran (39) trennbar ist.

3. Hydraulischer Anschlag nach einem der vorhergehenden Ansprüche, **dadurch gekennzeichnet, dass** das sekundäre Bremssystem eine sekundäre Trägheitsleitung (34) umfasst, die eine Fluidmasse umfasst.

4. Hydraulischer Anschlag nach einem der vorhergehenden Ansprüche, **dadurch gekennzeichnet, dass** er eine Trennwand (10) aufweist, die die Druckkammer (22) vom Behälter (30) trennt, mit einem radial äußeren Kranz (12), der einen zentralen Teil umgibt, der zwei Elemente bildet, wobei ein Element den ersten Trägheitskanal (14) und das andere das sekundäre Bremssystem enthält.

5. Hydraulischer Anschlag nach Anspruch 4, **dadurch gekennzeichnet, dass** der erste Trägheitskanal (14) eine schraubenförmige Wicklung aufweist, die auf der Hauptachse (A) zentriert ist.

6. Hydraulischer Anschlag nach einem der vorhergehenden Ansprüche, **dadurch gekennzeichnet, dass** der Vorratsbehälter (30) eine elastische Hülle (32) aufweist, die eine Steifigkeit aufweist, die im Ruhezustand das Fluid in die Kompressionskammer (22) drückt.

7. Hydraulischer Anschlag nach einem der vorhergehenden Ansprüche, **dadurch gekennzeichnet, dass** die Druckkammer (22) eine flexible Außenwand (24) aufweist, die einen äußeren Puffer (26) aufweist, der durch einen Vorsprung dieser Wand (24) gebildet ist, der die axiale Geschwindigkeit (V) aufnimmt.

8. Hydraulischer Anschlag nach einem der vorhergehenden Ansprüche, **dadurch gekennzeichnet, dass** er eine Klappe aufweist, die einen freien Durchgang des Fluids vom Behälter (30) zur Druckkammer (22) ermöglicht, um sie zu füllen.

9. Kraftfahrzeug mit Aufhängungen, die mit hydraulischen Endanschlägen ausgestattet sind, **dadurch gekennzeichnet, dass** diese Anschläge nach einem der vorhergehenden Ansprüche sind.

## Claims

1. Hydraulic end-of-travel stop for a motor vehicle suspension, receiving along a main axis (A) a compression speed to be braked (V), comprising on the side receiving this speed (V) a hydraulic compression chamber (22), and on the other side a reservoir (30) receiving the fluid coming from the compression chamber (22) during its compression, comprising between the compression chamber (22) and the reservoir (30) a first inertial conduit (14) containing a first column of fluid forming a main braking system, and comprising in parallel with this main braking system, between the compression chamber (22) and the reservoir (30) reservoir (30) a secondary braking system capable of transferring only a limited portion of fluid from the compression chamber (22) to the reservoir (30), **characterized in that** the limited portion of fluid from the compression chamber (22) is included in a secondary compression chamber (38) included in the compression chamber (22), and can be included in a secondary reservoir (40) included in the reservoir (30).

2. Hydraulic stop according to Claim 1, **characterized in that** the secondary compression chamber (38) is separated from the compression chamber (22) by a flexible membrane (36), the secondary reservoir (40) being able to be separated from the reservoir (30) by a flexible membrane (39).

3. Hydraulic stop according to any one of the preceding claims, **characterized in that** the secondary braking system comprises a secondary inertial duct (34) comprising a mass of fluid.

4. Hydraulic stop according to any one of the preceding claims, **characterized in that** it comprises a separation partition (10) separating the compression chamber (22) from the reservoir (30), comprising a radially outer ring (12) surrounding a central part, forming two elements, one element containing the first inertial duct (14) and the other containing the secondary braking system.

5. Hydraulic stop according to Claim 4, **characterized in that** the first inertial duct (14) comprises a helical winding centered on the main axis (A).

6. Hydraulic abutment according to any one of the preceding claims, **characterized in that** the reservoir (30) comprises an elastic envelope (32) having a stiffness which, at rest, expels the fluid towards the compression chamber (22).

7. Hydraulic abutment according to any one of the preceding claims, **characterized in that** the compression chamber (22) comprises a flexible outer wall (24), comprising an outer buffer (26) formed by a protuberance of this wall (24) receiving the axial speed (V).

8. Hydraulic abutment according to any one of the preceding claims, **characterized in that** it comprises a valve allowing a free passage of the fluid from the reservoir (30) towards the compression chamber (22) in order to fill it.

9. Motor vehicle comprising suspensions equipped with end-of-travel hydraulic stops, **characterized in that** these stops are according to any one of the preceding claims.
